(19)

**Europäisches Patentamt**
**European Patent Office**
**Office européen des brevets**

(11) **EP 2 031 791 A1**

(12) **EUROPEAN PATENT APPLICATION**

(43) Date of publication:
**04.03.2009  Bulletin 2009/10**

(51) Int Cl.:
**H04L 7/00** (2006.01)

(21) Application number: **07115338.1**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Deutsche Thomson OHG**
**30625 Hannover (DE)**

(72) Inventors:
• **Feng, Qilong**
  **78052 Villingen-Schwenningen (DE)**

• **Schmitt, Dirk**
  **78052 Pfaffenweiler (DE)**
• **Mueller, Stefan**
  **78048 Villingen-Schwenningen (DE)**

(74) Representative: **Thies, Stephan**
**Deutsche Thomson OHG**
**European Patent Operations**
**Karl-Wiechert-Allee 74**
**30625 Hannover (DE)**

(54) **Apparatus and method for recovering data from a clocked input signal**

(57)    The present invention relates to a Data Recovery Circuit for recovering data from a clocked input signal. The data recovery circuit comprises a clock recovery circuit for recovering a clock signal from the input signal, a sampling circuit for sampling the input signal using said clock signal and a decoder for decoding data encoded in the received input signal, said decoder determining a reliability of detected information encoded in the input signal. A feedback line connects the decoder to the clock recovery circuit such that the clock recovery circuit is controlled by the detected reliability.

Fig. 3

**Description**

Field of the invention

The present invention relates to an apparatus and a method for data recovery from a clocked input signal. It relates to data recovery from optical storage, magnetic storage or in wireless communication, in particular where the input signal has a low Signal to Noise Ratio SNR.

Background of the invention

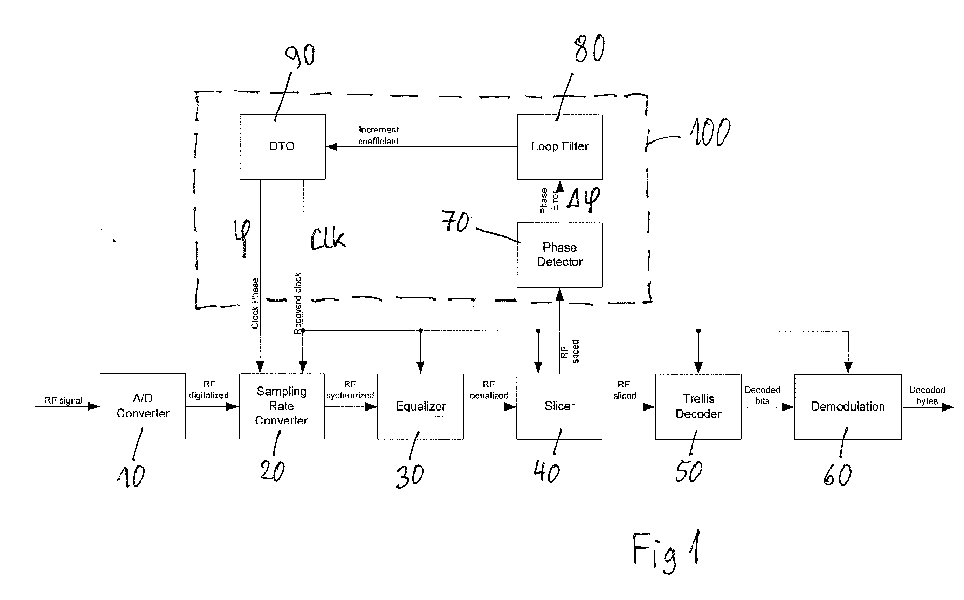

**Fig. 1** shows an example of the conventional data recovery circuit. The circuit comprises an A/D Converter 10, which receives a Radio Frequency or RF signal. The RF signal may be received from a wired or wireless communication network or may be read out from a magnetic or optical storage medium.

The analogue RF signal is converted into a digitised RF signal, which is input to a sampling rate converter 20. In general, information is represented within the RF signal by a number of discrete states. In case of a binary signal two different states or signal levels are used, which represent the two different values, "0" and "1", that one bit of information can have. Assuming serial transmission or readout, the bits follow each other with a constant temporal spacing. Such an RF signal is named a clocked signal in the following, taking into account that the bits of information are temporally spaced by the period of a clock signal that is intrinsic or inherent in the RF signal. Between the portions of the RF signal that represent the bits, the RF signal has continuous transitions during which the amplitude does not directly represent any information. The task of the sampling rate converter is to sample the digitised RF signal at those time instances where it is representative of information bits. To this end, the frequency and phase of the clock inherent in the RF signal must be estimated and provided to the sampling rate converter 20.

Clock recovery is an important element in all digital information communications and data transmissions. Although the various media may have different transmission characteristics, prompt and accurate clock recovery is always necessary to enable synchronization between the communication network and the receiving system. An accurate recovered clock can improve the stability of the data received and minimize the Bit Error Rate (BER).

The received Radio Frequency signal RF is digitized by an Analogue-Digital-Converter 10 and thereafter resampled with the recovered clock in the Sampling Rate Converter 20 for synchronizing. The synchronized RF signal goes through an equalizer 30 for reducing the Inter-Symbol-Interference (ISI) and its DC-component is then cancelled in a slicer 40.

The DC-free RF signal is applied to a trellis decoder 50, which is usually a Viterbi decoder. In the trellis decoder, a Partial Response Maximum Likelihood or PRML method is applied to model the recording and reproduction of the digital data.

The recovered bit stream is thereafter forwarded to a channel decoder or demodulator 60, which removes or inversely performs any channel coding or modulation, and the original data is delivered, e.g. in parallel format.

A phase locked loop 100 is provided in the conventional data recovery circuit of Figure 1. The phase locked loop 100 is used for recovering the clock inherent in the received RF signal. The recovered clock Clk in turn drives and synchronizes the sampling rate converter 20, the equalizer 30, the slicer 40, the trellis decoder 50 as well as the demodulator 60. Therefore, a precise clock recovery is an essential requirement of the data recovery circuit.

An apparatus for receiving and reproducing a data stream from an input signal such as a readout signal from optical storage or from magnetic storage, or the received signal from a communication system, typically comprizes clock recovery for synchronization. A fully digital conventional phase locked loop 100 is shown in Fig. 1. The phase locked loop 100 comprises a phase detector 70, a loop filter 80 and a discrete timing oscillator or digitally tunable oscillator 90. The Phase Locked Loop 100 is employed for synchronizing onto the clock inherent in the incoming RF signal and for generating a recovered clock signal Clk using a Digitally Tunable Oscillator or DTO. The phase detector 70 detects, as a phase error signal $\Delta\varphi$, the phase difference between the inherent clock and the recovered clock signal. For correcting the phase difference, an output signal is therefore transferred to the DTO which enables that an actual and stable clock signal is recovered. The incoming RF signal is synchronized by this recovered clock. The sliced RF signal and the recovered clock Clk are input to the phase detector 70, which detects a phase difference $\Delta\varphi$ between them. The phase difference or phase error signal $\Delta\varphi$ is thereafter outputted to the loop filter 80, where it is filtered and converted to an increment coefficient adapted to control the Discrete Timing Oscillator DTO 90. Both the recovered clock signal Clk and the compensation phase information $\varphi$ relating to the corresponding recovered clock are generated and sent to the sampling rate converter SRC. The frequency and phase of the recovered clock signal are adjusted by the increment coefficient until both the phase and frequency of the recovered clock corresponds to the phase and frequency of the clock that is inherent in the RF signal.

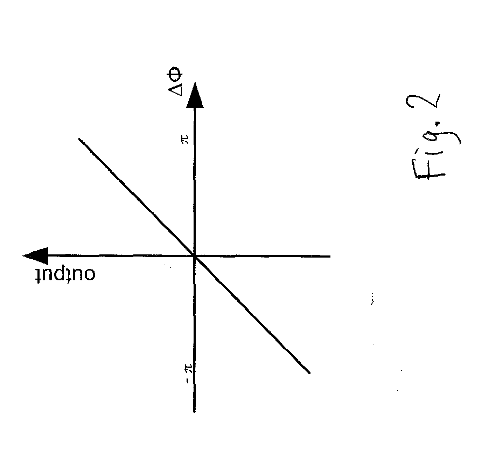

**Fig. 2** shows a Phase comparing characteristic of a phase detector, describing the functional relation between the phase difference present between the two input signals of the phase detector and the value of the output signal generated as a function thereof. The horizontal axis indicates the phase error and the vertical axis indicates the output value. In a conventional PLL, this characteristic is usually fixed or has only a few selection possibilities.

Along with advances in optical storage, magnetic storage and communication, the speed of reading, writing or transmitting is strongly increased. Because of the involved high density, variation of the media sensitivity, focussing, tracking, imperfect laser power control during storage writing, as well as strong Additive White Gaussian Noise (AWGN) in wireless communication, RF signals contain a lot of random and/or systematic noise. Because of this, a phase difference detected by a phase detector in a conventional phase locked loop contains not only a phase error caused by the difference between the inherent clock and the recovered clock, but also an additional phase error caused by the random noise and the systematic distortion. This additional phase error causes PLL instability, so that the performance of the PLL is deteriorated. In the extreme, if the recovered clock is shifted by more than half a clock period relative to the "real" clock, then synchronization may be lost and a bit shift may occur, which severely impedes data acquisition.

US 2004/0091069 A1 discloses a clock recovery system with two identical PLL parts and these two parts are set with different parameters and selected in accordance to the control logic. In this way the PLL can select the better one of these states between these two PLL parts for improving the performance of the clock recovery. Because there are only two PLL parts and these two PLL parts are set with the parameters without consideration of using feedback information of the quality of the incoming RF signal and the quality of current PLL status, the improvement of clock recovery is limited by the setting of these two PLL parts. However, both PLL parts are affected by random noise, which diminishes the stability and preciseness of clock recovery.

US 2003/0128451 A1 discloses a clock recover circuit, which comprises an analogue digital converter receiving an amplified reproduction signal. The digitised signal is input to an equalizer, which forwards the equalized signal to a Viterbi decoder. A phase locked loop is used for controlling the analogue/digital converter. The equalized signal is input to a phase error detector and to a signal quality judgment circuit. A phase-frequency error detection circuit outputs the phase error signal from the phase error detector, if the signal quality judgment circuit indicates a good signal quality. A given value corresponding to the retained sign is output, if the signal quality is bad. Performance is improved by means of introducing the signal quality judgment function for monitoring the amplitude based incoming signal, however, it can be seen to have the shortcoming that random noise or systematic deviation typically don't influence the amplitude of the incoming RF signal, so they can't be detected from looking at that amplitude alone. In particular random noise such as jitter may not be determined from the signal amplitude. Therefore the performance of the PLL can't be improved very much for such an incoming signal.

Invention

It is an object of the present invention to provide an apparatus and method for recovering data from a clocked input signal, which reliably recover the data encoded in the clocked input signal, even if the signal quality is deteriorated.

The problem is solved by a Data Recovery Circuit for recovering data from a clocked input signal according to the present invention. Preferably, the data recovery circuit comprises a clock recovery circuit for recovering a clock signal from the input signal, a sampling circuit for sampling the input signal using said clock signal, and a decoder for decoding data encoded in the received input signal, said decoder determining a reliability of decoded information. A feedback line connects the decoder to the clock recovery circuit such that the clock recovery circuit is controlled by the decoded reliability.

Preferably, the clock recovery circuit of the Data Recovery Circuit for recovering data from a clocked input signal according to the present invention comprises a phase locked loop comprising a phase detector. The phase detector detects a phase difference between the recovered clock signal and the clocked input signal and generates a phase detection signal. The phase detector further comprises an oscillator. The oscillator generates the recovered clock signal in response to the phase detection signal.

Compared with other PLL structures, which employ a simple phase error detector and supply simply an output signal proportional to the detected phase error, the presented adaptive PLL, with detection of the tendency of the PLL quality or the reliability of the synchronized decoded bit, improves greatly the accuracy of clock recovery. In relation to other PLL structures, which judge signal quality based on the amplitude of the incoming signal, the adaptive PLL according to this invention, by including a detection of the reliability of the synchronized decoded bits, improves greatly the accuracy of clock recovery if the incoming signal includes unwanted components in the form of strong noises (e.g. AWGN) or systematic deviations (e.g. asymmetry). Advantageously, this improvement is given even in those cases, where the unwanted components do not influence the signal amplitude.

It is usually very difficult to indicate the quality of the incoming RF signal. The phase error, which is detected by the phase detector in phase locked loop, includes both the actual phase error between the incoming clock and recovered clock and the phase error caused by the noise or/and the systematic deviation. The reliability information is introduced in this invention to indicate the quality of incoming signal as well as the phase locked loop performance. The data recovery circuit increases the digital PLL performance and improves the recovered clock as well as quality and validity of recovered bit stream from an optical storage media, such as CD/DVD/BD/HD-DVD, with lower SNR.

The data recovery circuit according to the present invention has lower Signal to Noise Ratio SNR, and more particularly it relates to an adaptive phase detector which detects the phase difference between the input RF signal and the recovered clock and produces an output signal to correct the clock recovery. The adaptation of the PLL is realized by the feeding back reliability information. The reliability information may be indicated by a trellis decoder using a soft output algorithm. This reliability information can be introduced as a feedback signal for the PLL to correct the PLL and further to improve the quality of the covered clock, in this way the whole performance of data acquisition can also be improved.

According to a preferred embodiment of the present invention, the Data recovery circuit for recovering data from a clocked input signal according the reliability detected by the decoder controls the phase detection signal fed to the oscillator. A trellis decoder using soft output algorithm may be employed in this invention to supply a soft output decision, which includes not only the hard decision information, but also the reliability signal indicating the quality of the decision. The reliability information can be applied for judgment of the performance of PLL and the quality of the incoming RF signal. The reliability signal is used as a feedback to the PLL to adjust the strength of PLL and further to improve the PLL performance and the accuracy of the recovered clock.

A trellis decoder can produce a soft output decision when a soft output decision (SOVA, MAP, Max-Log-Map etc.) algorithm is employed in the trellis decoder. The soft output decision includes not only the hard decision information (the sign of the soft output decision) but also the reliability information (the absolute value) which indicates the quality of the incoming RF signal or the quality of the PLL at the moment when the decision is made.

In particular, the data recovery circuit according to a preferred embodiment comprises averaging means for averaging the reliability and controlling the phase detection signal using the averaged reliability.

One realizable approach presented in this invention uses an averaged reliability for a statistic correction, it works in asynchronous mode. The delay in the PLL is not influenced in this realization but the accuracy of the correction is limited. This approach is very suitable for the improvement of a PLL for the incoming RF signal with systematic distortions, variations and deviations, like asymmetry or dropout.

Preferably, the data recovery circuit comprises a delay circuit. The delay circuit is adapted to delay an output of the phase detection signal from the phase detector. Thereby, the phase detection and the reliability signal from the decoder may be synchronized, such that the decoded reliability corresponds to the detected phase error. The phase error output is delayed for as many clock intervals as are needed for producing the soft output decision. The delay in PLL is influenced in this realization but maximally accurate correction is realized. The performance of the PLL is greatly improved for the RF signal with random distortions, variations and deviations, like e.g. AWGN, jitter, laser noise etc..

The increase in digital PLL performance and the improvement of the recovered clock and the quality and validity of the recovered bit stream are realized by means of feeding back soft output decision, which has not only the decoded bit information but also the reliability information of the corresponding decoded bit, the soft output decision is usually realized with the trellis decode based on the Soft Output Viterbi Algorithm (SOVA), Maximum A Posteriori (MAP) algorithm or Max-Log-MAP algorithm. The characteristic of the phase detector used in the PLL for detecting the phase difference between the input signal and the generated clock and producing an output signal for correcting the phase error, will be adjusted by the feedback reliability of the decoded bit stream for adaptation to the current input signal quality, and furthermore to reach the best PLL performance and recover the accurate clock. The quality and the validity of recovered bits stream is improved in this way by the adaptive PLL performance and the accurate recovered clock.

By using this method or by applying this apparatus in the hardware design, the bit error rate BER of bit recovery in data acquisition for the input RF signal having lower SNR or strong systematic distortions, variations and deviations is greatly improved, and the quality and validity of corresponding restored data are greatly increased.

Brief description of the drawings

Fig. 1 shows a conventional data recovery circuit.

Fig. 2 shows a diagram of the relationship between an input phase error and the output of the phase detector for the phase loop in conventional data recovery circuit.

Fig. 3 shows a block diagram of a first embodiment of the data recovery circuit according to the present invention.

Fig. 4 shows a block diagram of a second embodiment of the data recovery circuit according to the present invention.

Fig. 5 shows a block diagram of a third embodiment of the data recovery circuit according to the present invention.

Fig. 6 shows a diagram of the relationship between the phase error and the output of the phase detector for the phase loop according to the embodiments of the present invention.

Fig. 7 shows the block diagram of a phase detector.

Fig. 8 shows a trellis diagram of a 6 state trellis decoder.

Fig. 9 shows a diagram of the relationship between bit error rate and signal to noise ratio.

Subsequently, preferred embodiments of the present invention shall be described with reference to the accompanied drawings. Corresponding features are designated by the same reference signs in the accompanied drawings.

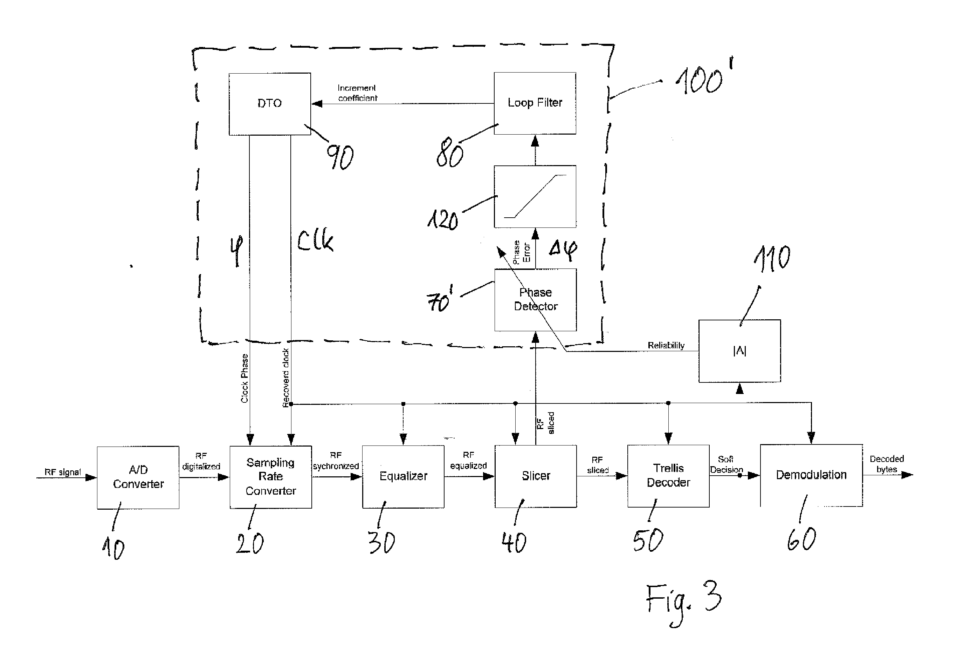

**Fig. 3** shows a block diagram of a first embodiment of the present invention. The data recovery circuit of Figure 3 comprises all of the features shown and described in reference to Figure 1. However, the phase detector 70' and the PLL 100' are modified. Additionally, the data recovery circuit of Figure 3 comprises a reliability circuit 110. The reliability circuit 110 is connected to the output of the trellis decoder; it is adapted to calculate the reliability of the decoded bits using the corresponding soft decision output from the trellis decoder 50. The determined reliability is output to the modified phase detector 70' in Fig. 3. For this, the output phase error from the phase detector 70 is made dependent on both the detected phase error as well as on the averaged reliability. Reference sign 120 denotes the resultant relationship between the output signal from the phase detector and the detected phase error. This relationship changes in accordance with the receiver reliability.

The embodiment of Figure 3 illustrates the principle of the soft output decision feedback digital PLL. The reliability information of soft output decision output is used for correcting the output of phase detector. Further, the increment coefficient is influenced by the corrected phase error, and the recovered clock Clk and its corresponding phase information $\varphi$ are improved in this way. The RF signal is re-sampled more accurately in Sampling Rate Converter 20 by means of using the signal from phase detector 70' without influence of the noise and systematic distortion in the RF signal.

Fig. 3 shows the working principle of the adaptive digital PLL in the present invention. The incoming RF signal is digitized by an analogue/digital converter 60, after which it is equalized 30 and sliced 40. A trellis decoder 50 using a soft output algorithm like SOVA, MAP or Max-Log-MAP is employed here for producing the soft output decision. The reliability part of the soft output decision is thereafter extracted 110 and applied to the phase detector 70' to adjust the phase error output $\Delta\varphi$, which is detected according to the difference between the actual clock information in the incoming RF signal and the recovered clock signal Clk. The corrected phase error output is filtered with a loop filter 80 and converted into the increment coefficient delivered thereafter to the DTO 90 to improve the recovered clock Clk and its corresponding phase information $\varphi$. In this manner the phase locked loop 100' is adaptive to the quality of the current incoming RF signal or the quality of the current PLL performance.

The soft output algorithm which is employed in the trellis decoder 50 in Fig. 3 estimates the soft output information for each transmitted binary symbol in the form of the log-likelihood function $\Lambda(c_t)$ as follows

$$\Lambda(c_t) = \log \frac{P_r\left(c_t = 1 \mid \mathbf{r}_1^\tau\right)}{P_r\left(c_t = 0 \mid \mathbf{r}_1^\tau\right)}$$

Where $\mathbf{r}$ is the received sequence and $P_r\left(c_t = i \mid \mathbf{r}_1^\tau\right)$, $i=0,1$ is the a posteriori probability (APP) of the transmitted symbol. The trellis decoder 50 makes a hard decision by comparing $\Lambda(c_t)$ to a threshold equal to zero

$$c_t = \begin{cases} 1 & if & \Lambda(c_t) \geq 0 \\ 0 & & otherwise \end{cases}$$

The trellis decoder 50 selects the path $\mathbf{x}$ with the minimum path metric $\mu_{\tau,min}$ as the maximum likelihood (ML) path in the same way as the conventional PRML decoder, the probability of selecting this path is proportional to

$$P_r\left(\mathbf{c} \mid \mathbf{r}_1^\tau\right) \approx e^{-\mu_{\tau,\min}}$$

Let us denote by $\mu_{t,c}$ the minimum path metric of the paths with the complementary symbol to the ML symbol at time t. If the ML symbol at time t is 1, then its complementary symbol is 0. Therefore we can write

$$P_r\left(c_t = 1 \mid \mathbf{r}_1^\tau\right) \approx e^{-\mu_{\tau,\min}}$$

$$P_r\left(c_t = 0 \mid \mathbf{r}_1^\tau\right) \approx e^{-\mu_{t,c}}$$

The logarithm of the ratio of the above two probabilities is given by

$$\log \frac{P_r\left(c_t = 1 \mid \mathbf{r}_1^\tau\right)}{P_r\left(c_t = 0 \mid \mathbf{r}_1^\tau\right)} \approx \log \frac{e^{-\mu_{\tau,\min}}}{e^{-\mu_{t,c}}} = \mu_{t,c} - \mu_{\tau,\min}$$

Let us denote by $\mu_t^1$ the minimum path metric for all paths for which $c_t$ is 1 and $\mu_t^0$ the minimum path metric for all paths for which $c_t$ is 0. If the ML estimate at time t is 1, its complementary symbol at t is 0. Then $\mu_t^1 = \mu_{\tau,\min}$ and $\mu_t^0 = \mu_{t,c}$ and the log-likelihood ratio in above equation becomes

$$\log \frac{P_r\left(c_t = 1 \mid \mathbf{r}_1^\tau\right)}{P_r\left(c_t = 0 \mid \mathbf{r}_1^\tau\right)} \approx \mu_t^0 - \mu_t^1$$

On the other hand, if the ML hard estimate at time t is 0, its complementary symbol is 1, giving $\mu_t^0 = \mu_{\tau,\min}$ and $\mu_t^1 = \mu_{t,c}$. The log-likelihood ratio for this case is given by

$$\log \frac{P_r\left(c_t = 1 \mid \mathbf{r}_1^\tau\right)}{P_r\left(c_t = 0 \mid \mathbf{r}_1^\tau\right)} \approx \log \frac{e^{-\mu_{t,c}}}{e^{-\mu_{\tau,\min}}} = \mu_{\tau,\min} - \mu_{t,c} = \mu_t^0 - \mu_t^1$$

The above-mentioned two equations indicate, regardless of the value of the ML hard estimate, the log-likelihood ratio can be expressed as

$$\Lambda(c_t) = \log \frac{P_r\left(c_t = 1 \,\middle|\, \mathbf{r}_1^{\tau}\right)}{P_r\left(c_t = 0 \,\middle|\, \mathbf{r}_1^{\tau}\right)} \approx \mu_t^0 - \mu_t^1 .$$

That is, the soft output of the decoder can be obtained as the difference of the minimum path metric among all the paths with symbol 0 at time t and the minimum path metric among all the paths with symbol 1 at time t. The sign of $\Lambda(c_t)$ determines the hard estimate at time t and its absolute value represents the soft output information as well as the reliability of the hard decision, it indicates the quality of the incoming RF signal or the quality of the timing recovery.

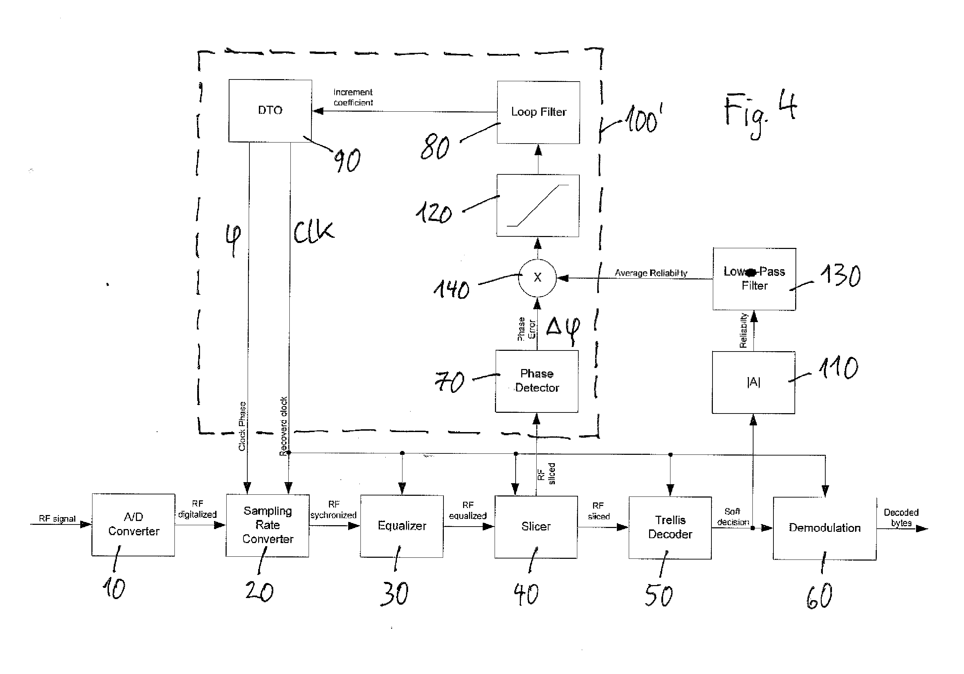

**Figure 4** illustrates a second embodiment of the present invention. Identical reference signs in Figures 3 and 4 make reference to corresponding features. The embodiment of Figure 4 comprises all of the features of the embodiment of Figure 3. Additionally, the data recovery circuit of Figure 4 comprises a lowpass filter 130. The lowpass filter 130 constitutes an averaging means, which averages the reliability information received from the reliability circuit 110. The averaged reliability is output from the lowpass filter 130 to the phase locked loop 100'. An additional multiplier 140 is provided in the phase locked loop. The phase error Δφ output from the phase detector 70 is multiplied with the averaged reliability received from the lowpass filter 130. The resulting signal is forwarded to the loop filter 80 of the phase locked loop 100.

The average absolute value of soft output decision, i.e. the average reliability, which is produced by the trellis decoder 50 using soft output algorithm, is fed back to the phase locked loop 100' for controlling the gain of the output signal, which is produced by the phase detector 70 according to the detection of the phase error Δφ between the signal clock of the incoming RF signal and the recovered clock signal Clk. This approach is an asynchronous method for detecting the quality of the incoming RF signal or the quality of the phase locked loop by means of using the reliability information in the soft output decision. Asynchronous in this case means that an individual phase error Δφ is modified by an average reliability that contains contributions from several past decoder decisions.

The first realizable approach based on the above-mentioned working principle is illustrated in Fig. 4. The incoming RF signal is digitized by the ADC 10 and synchronized 20 with the recovered clock Clk, then it is equalized 30, sliced 40 and delivered to the trellis decoder 50 using the soft output algorithm described hereinbefore, the absolute value is extracted 110 as the reliability information for every transmitted symbol, and is averaged with a lowpass filter 130. The output of the lowpass filter 130 represents an average reliability of a limited section of most recently recovered bits and provides a reliability trend of the incoming RF signal or the timing recovery status, this reliability trend information is then fed back to be combined with the output of the phase detector 70, which detects the phase error of the input sliced RF signal and produces an output corresponding to the incoming phase information. The thus corrected output of the phase detector is then limited 120 and filtered by a loop filter 80 and converted to the corresponding increment coefficient going to the DTO 90 to correct the current sampling rate, furthermore to improve the quality and the accuracy of the recovered clock.

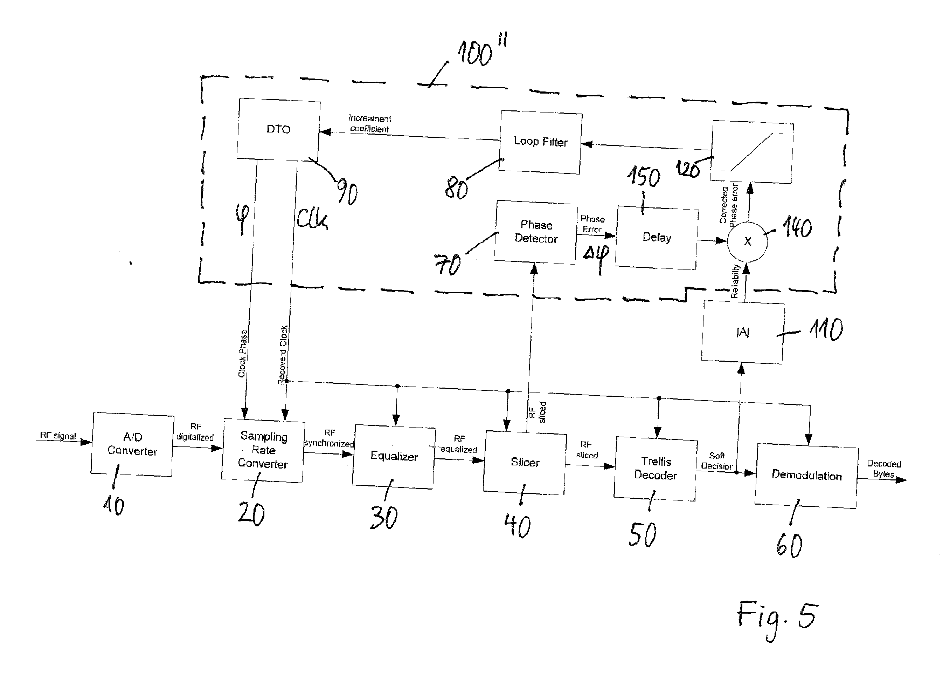

**Figure 5** illustrates a third embodiment of the present invention. Identical reference signs in Figures 4 and 5 make reference to corresponding features. The PLL 100" is again modified. The embodiment of Figure 5 comprises all of the features of the embodiment of Figure 4 except for the lowpass filter. In Fig. 5, the phase locked loop 100" is controlled by the non-averaged reliability from the reliability circuit 110. However, it is apparent that the lowpass filter 130 could just as well be used in the embodiment of Fig. 5. Additionally, the phase locked loop 100" in Figure 5 comprises a delay circuit 150. The phase error Δφ from the phase detector 70 is input to the delay circuit 150. The delay circuit 150 delays the transfer of the phase error Δφ to the multiplier 140 until the multiplier receives the reliability corresponding to the phase error in the delay circuit 150.

Fig. 5 illustrates another realizable approach to improve the PLL performance. Every phase error output signal Δφ is delayed by a time period that is equal to the delay needed for producing the soft output decision, in order to synchronize the phase error output and the soft output decision. This enables that every phase error output Δφ is corrected by the corresponding reliability information. The corrected phase error signal is then used for correcting the recovered clock Clk and its corresponding phase information φ, and further for improving the quality and accuracy of the re-sampled RF signal. In this approach, the correction works in a synchronous mode, meaning that every detected phase error Δφ is checked and modified with its corresponding reliability, which is produced by the reliability circuit 110 using a soft output decision from the trellis decoder 50.

Both, the second and third embodiment apply the reliability signal of the soft output decision from the trellis decoder 50 using a soft output algorithm. The output signal Δφ of the phase detector 70 is corrected by the feedback of the reliability signal. In this manner the gain of the phase locked loop 100', 100" is adaptive to the quality of the incoming RF signal or the quality of the phase locked loop 100. The performance of clock recovery is improved.

Fig. 5 shows the second realizable approach for improving the timing recovery based on the soft output decision feedback. The incoming RF signal is digitized by the ADC 10 and synchronized 20 with the recovered clock, then it is equalized 30, sliced 40 and delivered to the trellis decoder 50 using the soft output algorithm described hereinbefore, the absolute value is extracted 110 as the reliability information for every transmitted symbol and is further used for correcting 140 the synchronized output of the phase detector 70, which is delayed 150 by the same number of clock intervals as are needed for the soft output decision producing. The modified output of the phase detector is then limited 120 and inputted to the loop filter 80, further converted to an output corresponding to the increment coefficient going to the DTO 90 to influence the sampling rate, furthermore to improve the quality and the accuracy of the recovered clock.

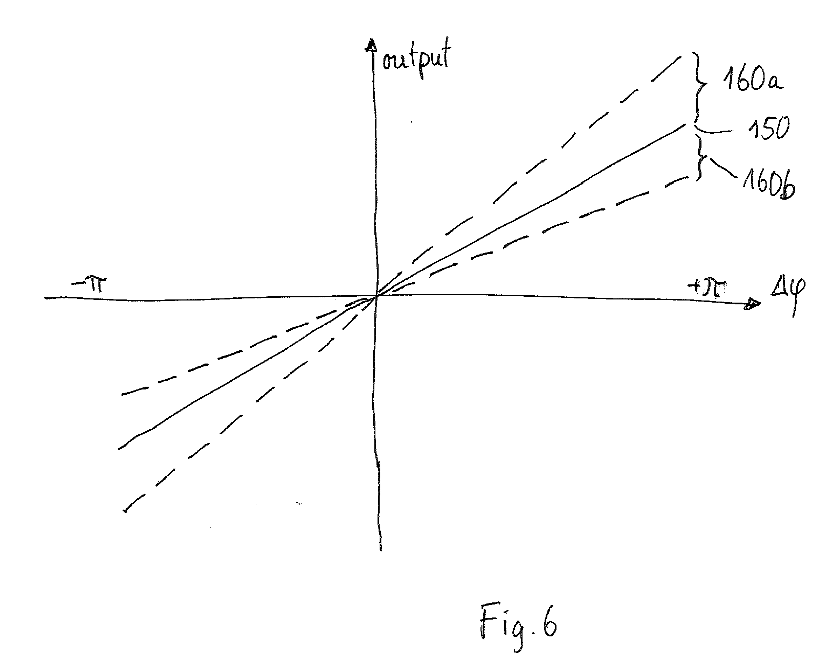

There is also a phase detector employed in the embodiments of the present invention. With respect to the correction of the feedback reliability signal, the phase comparing characteristic between the actual data clock and the recovered clock for the first and second approaches is shown in **Fig. 6**. The horizontal axis indicates the phase error $\Delta\varphi$ between the clock of the RF signal and the recovered clock Clk. The vertical axis represents the output signal that is input to the loop filter 80. The strength of the output of the phase detector 70 in Fig. 3 or the multiplier 140 in Figures 4 and 5 is adjusted by the feedback of the averaged or non-averaged reliability signal from the reliability circuit 110 within a limited range. Thereby, the PLL performance as well as the performance of timing recovery is improved. Reference sign 150 indicates the characteristic between the output signal and the phase difference in case of no adjustment due to the reliability signal. The adjustment strength is increased for incoming RF signals having relative high log-likelihood-ratio (LLR), in order to achieve a more stable and accurate recovered clock. Reference sign 160a indicates a range of characteristics having an increased output in case of a high reliability. In contrast, the adjustment strength is decreased for incoming RF signals having relatively low LLR, in order to avoid over-adjustment and finding an optimal PLL strength to recover clock signal with a relative good accuracy. This is indicated by reference sign 160b.

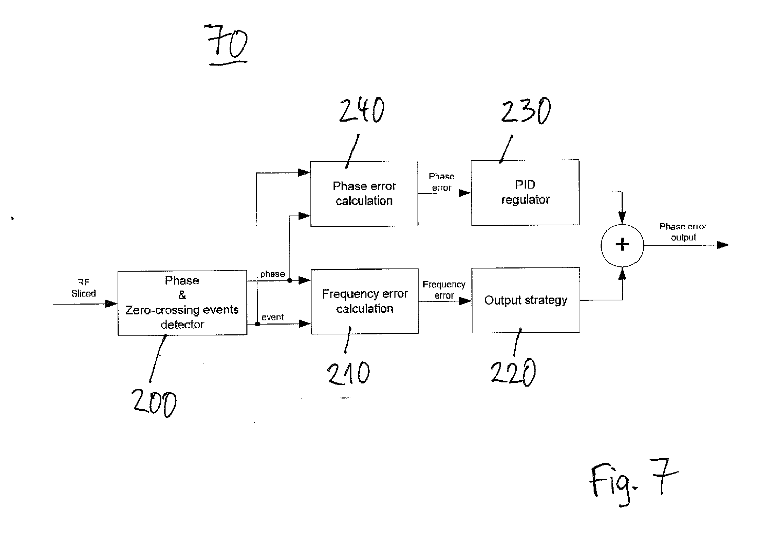

The block diagram of the phase detector 70 employed in the phase locked loops 100', 100" of Figures 4 and 5, is shown in **Fig. 7**. The phase detector 70 includes two parts: a phase error detection part and a frequency error detection part. A phase error calculator 240 and a PID regulator 230 constitute the phase error detection part; a frequency error calculator 210 and an output strategy circuit 220 constitute the frequency error detection part.

The phase information and the zero-crossing events of the sliced RF signal are detected by the phase and zero-crossing events detector 200 in advance for every incoming symbol. The phase error calculation block 240 then calculates the phase error from the sequence of phase informations and zero-crossing events. In parallel, the frequency error calculator 210 calculates the frequency error, also using the sequence of phase informations and zero-crossing events.

Furthermore, the phase error is adjusted with a PID regulator 230 and the frequency is selected with an output strategy circuit 220. The sum of the output of the PID regulator and the output of the output strategy circuit 220 constitutes the phase error output of the phase detector 70. There are two loops essentially realized in the phase detector 70, one is called phase loop and the other is called frequency loop.

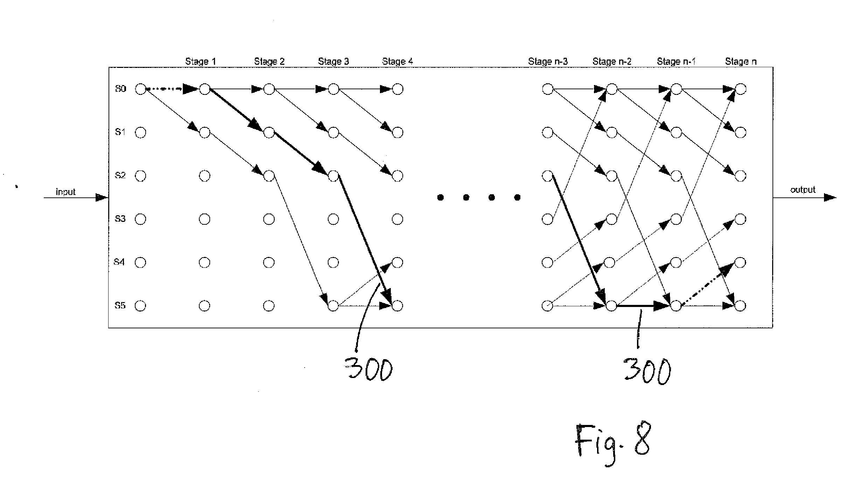

**Fig.8** illustrates a typical trellis diagram for a 6 state Viterbi decoder 50, as typically employed in optical storage readout, with n stages (Stage 1, ..., Stage n). The states are denoted as S0, ..., S5. Solid lines indicate a state transition with output "1" and the dashed lines indicate a state transition with output "0". The bold lines 300 illustrate current maximum likelihood paths or ML paths at two example stages. At each decoding clock a new symbol is sent to the trellis decoder 50 and the surviver paths are updated. The one surviver path having the smallest path metric is recognized as the current maximum likelihood or ML path and its output bit sequence is recognized as the ML bit stream, which has the maximum likelihood of being the actual bit stream in the incoming RF signal.

The log likelihood ratio information can be obtained using the difference between the path metric of the current ML surviver path and the path metric of the current competitor path, i.e. the path having the complementary symbol to the currently decoded symbol of the ML path; and this produced LLR information represents the soft output decision that contains the hard decision and the reliability of the current decision.

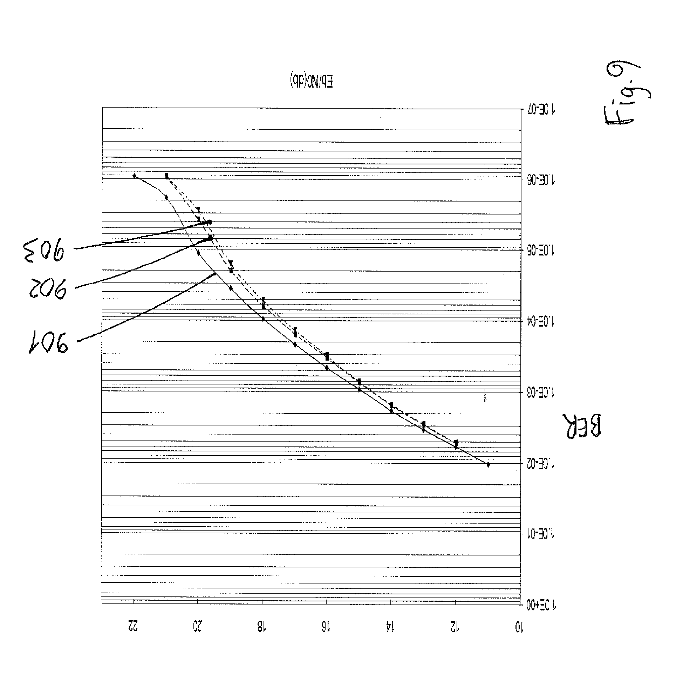

**Fig. 9** shows the relationship between the bit error rate (BER) and the signal to noise ratio Eb/N0. The graphs represent the simulation results with the conventional PLL structure 901, with the adaptive PLL structure according to the first realizable approach corresponding to the second embodiment 902, and with the adaptive PLL structure according to the second realizable approach corresponding to the third embodiment 903.

All the simulations are based on an acquisition system with the same parameters and input pattern, the length of simulation are about 1 million recovered bits. The input signal is generated with an ideal RF signal (with PRML waveform) to which Additional White Gaussian Noise (AWGN) was added in different strengths measured in Decibels db. Because of the simulation length, the results near the lowest bit error rates (BER) of 1.0E-6 are to be interpreted with caution.

As can be seen from the graph, comparing with the conventional PLL structure, the bit error rate of the recovered bit stream is improved by means of introducing the feedback soft output decision, which is produced the trellis decoder 50 employing a soft output algorithm.

With other words, the present invention relates to a data recovery circuit for recovering data from a clocked input signal. The data recovery circuit comprises a clock recovery circuit for recovering a clock signal from the input signal, a sampling circuit for sampling the input signal using said clock signal and a decoder for decoding data encoded in the received input signal, said decoder determining a reliability of detected information encoded in the input signal. A feedback line connects the decoder to the clock recovery circuit such that the clock recovery circuit is controlled by the detected reliability.

## Claims

1.  **Apparatus** for recovering data from a clocked input signal, comprising:

    a clock recovery circuit (100') for recovering a clock signal (Clk) from the input signal,
    a sampling circuit (10, 20) for sampling the input signal using said clock signal,
    a decoder (50) for decoding data encoded in the received input signal, said decoder (50) determining a reliability of decoded information,
    **characterized in that**
    a feedback line connects the decoder (50) to the clock recovery circuit (100') such that the clock recovery circuit is controlled by the decoded reliability.

2.  The apparatus of claim 1, wherein said clock recovery circuit (100') comprises a phase locked loop, said phase locked loop comprising a phase detector (70, 70'), said phase detector detecting a phase difference between the recovered clock signal (Clk) and the clocked input signal and generating a phase detection signal ($\Delta\varphi$), and an oscillator (90), said oscillator generating the recovered clock signal (Clk) in response to the phase detection signal ($\Delta\varphi$).

3.  The apparatus of claim 2, wherein the reliability detected by the decoder (50) controls the phase detection signal fed to the oscillator (90).

4.  The apparatus of claim 3, comprising an averaging means (130) for averaging the reliability and controlling the phase detection signal using the averaged reliability.

5.  The apparatus of claim 2 or 3, further comprising a multiplier (140) adapted to multiply the reliability or the averaged reliability with the phase detection signal ($\Delta\varphi$) output from the phase detector (70) in order to generate an amended phase detection signal fed to the oscillator (90).

6.  The apparatus of one of the previous claims, comprising a delay circuit (150) adapted to delay the phase detection signal ($\Delta\varphi$) from the phase detector (70).

7.  The apparatus of one of the previous claims, wherein the decoder (50) represents the reliability of detected information by a number between 0 and 1, wherein 1 represents the highest reliability and 0 represents the lowest reliability.

8.  The apparatus of one of the previous claims, wherein the decoder (50) is adapted to perform a soft output Viterbi algorithm (SOVA), a maximum a posteriori algorithm (MAP) or a Max-Log-Map algorithm.

9.  **Method** for recovering data from a clocked input signal, comprising the steps of:

    recovering a clock signal (Clk) from the clocked input signal,
    sampling (10,20) the input signal using said recovered clock signal (Clk),
    decoding (50) data encoded in the received input signal, wherein a reliability of decoded information is determined (110), the method **characterized by** the step of
    controlling the clock recovery circuit using decoded reliability.

10. The method of claim 9, wherein said step of recovering the clock signal comprises the steps of;

    detecting (70) a phase difference between the recovered clock signal (Clk) and the clocked input signal,
    generating a phase detection signal ($\Delta\varphi$) representative of the phase difference, and
    controlling an oscillator (90) using the phase detection signal such that said oscillator (90) generates the recovered clock signal (Clk) in response to the phase detection signal ($\Delta\varphi$).

11. The method of claim 10, wherein the detected reliability controls the phase detection signal fed to the oscillator (90).

12. The method of claim 11, comprising the steps of averaging (130) the detected reliability and controlling (140) the phase detection signal using the averaged reliability.

13. The method of claim 11 or 12, further comprising the step of
multiplying (140) the reliability or the averaged reliability by the phase detection signal ($\Delta\varphi$) output from the phase detector (70) in order to generate an amended phase detection signal controlling the oscillator (90).

14. The method of one of the previous claims, comprising the step of
delaying (150) the phase detection signal ($\Delta\varphi$) from the phase detector (70).

15. The method of one of the previous claims, wherein the reliability of detected information is represented by a number between 0 and 1, wherein 1 represents the highest reliability and 0 represents the lowest reliability.

16. The method of one of the previous claims, wherein the step of decoding comprises performing one of a soft output Viterbi algorithm (SOVA), a maximum a posteriori algorithm (MAP) and a Max-Log-Map algorithm.

RF signal → A/D Converter (10) → RF digitalized → Sampling Rate Converter (20) → RF sychronized → Equalizer (30) → RF equalized → Slicer (40) → RF sliced → Trellis Decoder (50) → Decoded bits → Demodulation (60) → Decoded bytes

100

DTO (90) — Clock Phase — Recoverd clock — CLK

Loop Filter (80) — Increment coefficient

Phase Detector (70) — Phase Error — ΔΨ

Fig 1

$\Delta\Phi$

$\pi$

output

$-\pi$

Fig. 2

A/D Converter 10

RF signal

RF digitalized

Sampling Rate Converter 20

RF sychronized

Equalizer 30

RF equalized

Slicer 40

RF sliced

Trellis Decoder 50

Soft Decision

Demodulation 60

Decoded bytes

DTO 90

Increment coefficient

Clock Phase

Recovered clock

Loop Filter 80

Phase Detector 70'

Phase Error

Δφ 120

|A| 110

Reliability

Clk

100'

Fig. 3

Fig. 4

EP 2 031 791 A1

100″

DTO

increament coefficient

Loop Filter

150

120

90

80

φ

Clk

Phase Detector

Phase Error

Delay

140

X

70

Δφ

Corrected Phase error

Reliability

|A| — 110

Clock Phase

Recoverd Clock

RF signal

A/D Converter

RF digitalized

Sampling Rate Converter

RF synchronized

Equalizer

RF equalized

Slicer

RF sliced

Trellis Decoder

Soft Decision

Demodulation

Decoded Bytes

RF sliced

10

20

30

40

50

60

Fig. 5

Fig. 6

EP 2 031 791 A1

70

240

230

| Phase error calculation | Phase error | PID regulator |

RF Sliced

| Phase & Zero-crossing events detector |

phase

event

210

| Frequency error calculation | Frequency error | Output strategy |

220

+

Phase error output

Fig. 7

Fig. 8

**European Patent Office**

**EUROPEAN SEARCH REPORT**

Application Number

EP 07 11 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 43 08 000 A1 (BOSCH GMBH ROBERT [DE]) 15 September 1994 (1994-09-15) * abstract * * paragraph [0003] - paragraph [0008] * * paragraph [0012] - paragraph [0013] * * paragraph [0017] * * paragraph [0026] - paragraph [0027] * * claim 1 * * figures 1,2 * | 1-16 | INV. H04L7/00 |
| X | JP 62 190934 A (TOKYO SHIBAURA ELECTRIC CO) 21 August 1987 (1987-08-21) * abstract * * figure 1 * | 1,9 | |
| X | US 5 940 449 A (KAADEN JUERGEN [DE] ET AL) 17 August 1999 (1999-08-17) * column 1, line 35 - line 36 * * column 1, line 63 - column 2, line 20 * * column 3, line 8 - line 12 * * column 4, line 16 - line 18 * * column 4, line 45 - line 48 * * figure 2 * | 1,9 | |
| A | HAGENAUER J ET AL: "A Viterbi algorithm with soft-decision outputs and its applications" IEEE, 27 November 1989 (1989-11-27), pages 1680-1686, XP010083731 * the whole document * | 1-16 | TECHNICAL FIELDS SEARCHED (IPC) H04L H04B |

The present search report has been drawn up for all claims

| Place of search | Date of completion of the search | Examiner |
|---|---|---|
| The Hague | 28 January 2008 | MARONGIU, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 5338

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2008

| Patent document cited in search report | | | Publication date | Patent family member(s) | | Publication date |
|---|---|---|---|---|---|---|
| DE 4308000 | A1 | | 15-09-1994 | NONE | | |
| JP 62190934 | A | | 21-08-1987 | NONE | | |
| US 5940449 | A | | 17-08-1999 | DE | 19517405 A1 | 21-11-1996 |
| | | | | EP | 0744848 A1 | 27-11-1996 |
| | | | | ES | 2174994 T3 | 16-11-2002 |
| | | | | JP | 8315518 A | 29-11-1996 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040091069 A1
- US 20030128451 A1